# EUROPEAN PATENT SPECIFICATION

(11) **EP 3 675 700 B1**
(45) Date of publication and mention of the grant of the patent: **27.03.2024**
(21) Application number: 17923197.2
(22) Date of filing: 01.09.2017
(51) Int. Cl.: A47K 13/00, B32B 33/00, B32B 3/08

(54) **STONE TOP TOILET LID AND SEAT**
TOILETTENDECKEL UND -SITZ MIT STEINOBERTEIL
ABATTANT DE TOILETTES EN PIERRE ET SIÈGE

(43) Date of publication of application: 08.07.2020
(73) Proprietor: Guizhou Topseat Technology Company Limited, Anshun, Guizhou 561100 (CN)
(72) Inventor: WU, Chengdong, Anshun Guizhou 561000 (CN)
(74) Representative: Karl, Christof
(86) International application number: PCT/CN2017/100123
(87) International publication number: WO 2019/041295

(56) References cited:
- WO-A2-2017/095346
- CN-A- 106 351 304
- CN-Y- 2 279 878
- CN-Y- 2 689 877
- DE-A1-102006 045 668
- DE-U1-202013 103 568
- JP-A- 2010 082 013
- US-A- 4 736 471
- US-A1- 2005 120 469
- US-A1- 2010 154 107
- US-A1- 2011 027 566
- US-A1- 2012 255 106

## Description

### ECHNICAL FIELD

This disclosure is generally directed to toilets and more particularly to a toilet lid and seat.

### BACKGROUND

Toilet seats and lids have existed in various forms for many decades. A toilet seat provides a surface for an occupant to comfortably sit and a toilet lid provides a protective cover for the toilet facility. Generally, toilet seats and lids are made of wood or plastic materials. These materials can degrade, discolor, and/or become damaged over time. Thus, many toilet seats and lids may become unattractive, structurally unsound, or both.

Additionally, most toilet seats and lids have plain, unadorned surfaces that do not include any type of decoration or permit any artistic expression. Some conventional toilet seats have surfaces that are adorned with silk-screen printing, hand painting, water-transfer printing, heat transfer printing, and the like. However, the surfaces of these seats, like plain toilet seats, can wear, chip off, degrade, or otherwise become damaged over time. There are also polyresin toilet seats that are made from resin compounds and are typically clear with optional decorative inserts.

Natural stone has many properties which are advantageous. For example, the stone has the strength and hardness, which gives the stone durability against wear and tear, as well as breaking. Stone also has the property of being fire proof, therefore can withstand higher heat and humid conditions. Furthermore, the texture and appearance of stone give articles made of stone a unique look. JP 2010 082013 A shows a toilet lid having a top layer made of a natural stone material. This layer is attached with a screw to the core layer of the lid.

However, natural stone also suffers from certain disadvantages which affect their use for a toilet seat. A slab of stone with appropriate density for making a toilet lid would have a heavy weight, while a thin sheet of stone would suffer from brittleness and easily breakable.

Therefore, there is a need for an improved toilet seat which uses natural stone.

### SUMMARY

The above objective is achieved by the present disclosure of the toilet lid having a layer formed of a slate stone and provided on a core layer wherein the first layer is bonded to the core structural layer using an adhesive.

According to an embodiment of the present disclosure, a toilet lid capable of being connected to a toilet seat, wherein the toilet lid comprises: a core structural layer having a shape and size associated with the toilet lid, and a first layer disposed on a first surface of the core structural layer, wherein the first layer is formed of stone.

In another embodiment of the toilet lid according to the invention, the thickness of the first layer is between 0.8 mm to 4.5 mm.

In another embodiment of the toilet lid according to the invention, the core structural layer is formed of materials comprising at least one of medium density fiberboard (MDF), high density fiberboard (HDF), wood, bamboo, molded bamboo powder, molded straw, concrete or plastic.

According to the invention, the first layer is bonded to the core structural layer using an adhesive.

In another embodiment of the toilet lid according to the invention, a second layer is disposed between the first layer and the core structural layer.

In another embodiment of the toilet lid according to the invention, the second layer forms part of the first layer and are bonded using an adhesive.

In another embodiment of the toilet lid according to the invention, the second layer provides structural strength to the first layer.

In another embodiment of the toilet lid according to the invention, the second layer comprises at least one of fiberglass mesh, textile, plastic or paper.

In another embodiment of the toilet lid according to the invention, the thickness and the material of the first layer is selected such that the first layer is translucent.

In another embodiment of the toilet lid according to the invention, the thickness and material of the first layer are selected such that the first layer is flexible.

In another embodiment of the toilet lid according to the invention, an illumination means is provided under the first layer.

In another embodiment of the toilet lid according to the invention, the illumination means is an electroluminescent lighting means.

In another embodiment of the toilet lid according to the invention, the core structural layer comprises at least one recesses portion on the first surface of the core structural layer to accommodate the illumination means.

In another embodiment of the toilet lid according to the invention, the first layer disposed on the core layer has a shape and size associated with the toilet lid such that the core layer and the first layer form a flush finish of the toilet lid edge.

In another embodiment of the toilet lid according to the invention, the core structural layer comprises two or more sub-layers, wherein each of the sub-layers comprises at least one of medium density fiberboard (MDF), high density fiberboard (HDF), wood, bamboo, molded bamboo powder, molded straw, concrete or plastic.

In another embodiment of the toilet lid according to the invention, at least one of the first surface or the second surface of the core structural layer is painted.

In another embodiment of the toilet lid according to the invention, the thickness of the core structural layer is between 3 mm to 18 mm.

In one embodiment of the disclosure a toilet lid assembly is provided, the toilet lid comprising a toilet lid as described in any one previous emodiments, and a toilet seat connected to the said toilet lid.

In one embodiment of the invention, a method of manufacturing a toilet lid is provided, the method comprising preparing a core structural layer having a shape and size associated with the toilet lid, preparing a first layer formed of a slate stone, and applying the first layer to a first surface of the core structural layer such that the first layer is bonded to the core structural layer using an adhesive.

In another embodiment of the disclosure, the method of manufacturing a toilet lid further comprises providing a second layer bonded to the first layer using adhesive.

In another embodiment of the disclosure, the method of manufacturing a toilet lid further comprises providing an illumination means under the first layer

In another embodiment of the disclosure the method of manufacturing a toilet lid further comprises preparing a recess on the core structural layer, and providing the illumination means in the recess of the core structural layer.

### BRIEF DESCRIPTION OF THE DRAWINGS

For a complete understanding of this disclosure and its features, reference is now made to the following description, taken in conjunction with the accompanying drawings, in which:
FIG. 1 illustrates a toilet with a natural stone toilet lid and seat, according to one embodiment of the present disclosure;
FIG. 2 illustrates top plan views of stone toilet lid and toilet seat, according to one embodiment of the present disclosure;
FIG. 3 illustrates a cross-section view of a stone toilet lid and toilet seat, according to one embodiment of the present disclosure; and
FIG. 4 illustrates top plan views of stone toilet lid with illumination, according to one embodiment of the present disclosure;
FIG. 5 illustrates a cross-section view of a stone toilet lid and toilet seat, according to another embodiment of the present disclosure; and

### DETAILED DESCRIPTION

The present disclosure provides a toilet lid and seat configured to include natural stone. The stone toilet lid and seat according to this disclosure offers many advantages.

The toilet lid and seat may be customized with natural stone according to the overall appearance of the toilet or bathroom. In addition, the toilet lid and seat according to this disclosure is constructed to be more durable and retain its original appearance for a longer period than conventional toilet lids and seats.

The toilet lid and seat according to embodiments of this disclosure is constructed with at least two layers of material: a core structural layer, and a first layer formed of a slate stone. By providing a core structural layer, it is possible to provide a slate stone layer with an appropriate thickness which does not increase the weight of the toilet lid, at the same time is structurally strong.

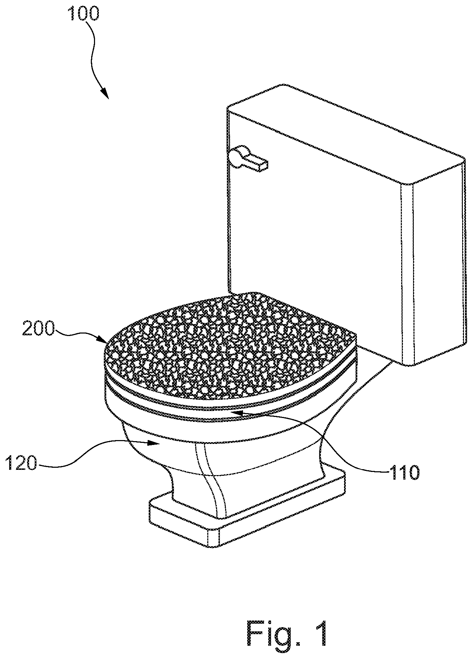

FIG. 1 illustrates a toilet with a toilet lid and seat, according to one embodiment of the present disclosure. The embodiment of the toilet shown in FIG.1 is for illustration only. Other embodiments of the toilet could be used without departing from the scope of this disclosure.

As shown in FIG. 1, a toilet 100 is fitted with a toilet lid 200 and toilet seat 110 over a bowl 120. The toilet 100 may be any suitable toilet with a bowl that is configured to be covered by a seat and lid. The bowl 120 has an opening that is generally round or oval shaped. The toilet lid 200 and toilet seat 110 have an overall size and shape configured to match the size and shape of the bowl 120 generally and to cover the opening of the bowl 120. The toilet lid 200 and toilet seat 110 attached to a rear portion of the bowl 120 or toilet 100 using hinged hardware that allows the toilet lid 200 and toilet seat 110 to raise and lower independently with respect to the bowl 120 and to each other, as is known in the art.

Although FIG. 1 depicts one example of a toilet 100 with a toilet lid 200 and toilet seat 110, various changes may be made to the embodiment shown in FIG. 1. For example, while the bowl 120 is depicted as generally round or oval in shape, the bowl 120 could include other shapes, such as a rectangle or octagon. Likewise, the toilet lid 200 and toilet seat 104 could also include other shapes in order to match, or be different from, the bowl 120.

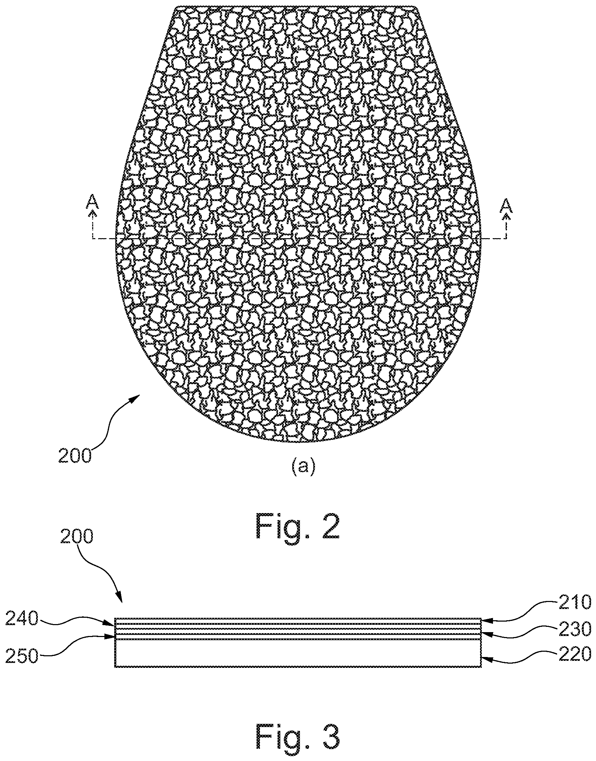

FIG. 2 illustrates top plan views of a stone top toilet lid and toilet seat, according to one embodiment of the present disclosure. The embodiment of the toilet lid 200 shown in FIG. 2 is for illustration only.

Other embodiments of the toilet lid 200 could be used without departing from the scope of this disclosure, and it will be understood that the toilet lid 200 may represent any other similarly arranged toilet lid.

As shown in FIG. 2, the top surface of the toilet lid 200 includes the first layer formed of stone. The first layer may in a not claimed variant be customizable to with any type of stone to appeal to a user of a toilet where the toilet lid 200 and seat 110. In certain embodiments, the first layer may be chosen to match or coordinate with a particular decorative scheme of a bathroom or restroom where the toilet is installed.

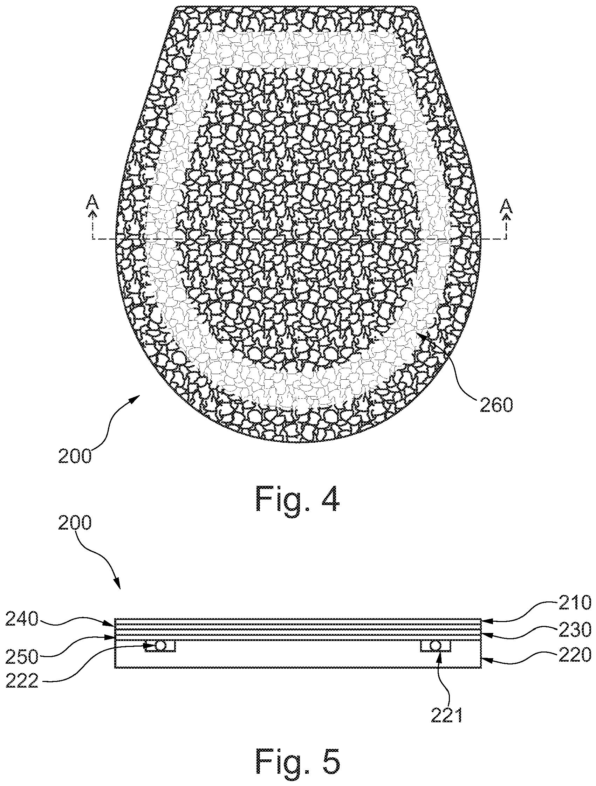

Although FIG.2 depicts one example of a toilet lid 200, various changes may be made to the embodiment shown in FIG. 2. For example, while only the top surfaces of the toilet 200 are shown with a slate stone layer as shown in the embodiment in FIG.3, the bottom surfaces of the toilet lid 200 may also include a stone layer as shown in another embodiment in FIG.4. As yet another example, the top surface and the bottom surface may both include the same type, pattern or color of the stone or they may be different.

FIG. 3 illustrates a cross-section view of toilet lid 200, according to one embodiment of the present disclosure. The embodiment of the toilet lid 200 shown in FIG. 3 is for illustration only. Other embodiments of the toilet lid 200 could be used without departing from the scope of this disclosure.

The toilet lid 200 comprises at least two layers 210 and 220 and additional layers 230, 240 and 250 are provided depending on the materials used the form part of the other layers depending. For clarity of illustration, the thickness of each layer may not be drawn to scale.

Layer 210 is a first layer provided on the top surface of the toilet lid 200. This layer is formed with slate stone such that the user can touch and feel the stone on top of the toilet lid. The stone is a natural stone provided in thin layers of between 0.1 mm to 4.5 mm thickness, preferably between 0.5 mm to 3 mm, even more preferred between 0.8 mm and 3 mm. For example, in one embodiment, the thickness of the stone layer may be about 1 mm to 2 mm, which allows for providing a structurally stable layer of stone, without adding unreasonable weight to the toilet lid.

Other appropriate thicknesses of the slate stone layer may be used depending on the type of the stone and their properties. In the invention, the stone is a slate stone as it has properties of high durability and can also be made into thin slices of stone layers. Some examples of stones suitable, but not forming part of the invention are Myca, Lime, Sandstone, Marble, Granite etc. However, a skilled person will understand that other type of natural stones, e.g., from various types of slate, schist, or marble, depending on the properties of the stone and the technology used in making different layers. For example, Slate provides vibrant colors and patterns, while Myca provides a harder surface.

The said stone layers might be of different colors depending on the type of stone used. For example, the stone may have a color of Silver Grey, D-Black, Galaxy Black, Cobre New, Argento Auro, Cobre, Verde, Auro, Verde Gris, Argento, Sea Green/Mare, Molto Rosa, California Gold, Negro, Arcobaleno Colore, Arcobaleno Gris, Falling Leaves, Blanco, Terra Rosso, Tan, Burning Forrest, Rustique.

The first layer disposed on a core layer 220 has a shape and size associated with the toilet lid such that the core layer and the first layer form a flush finish of the toilet lid edge. Layer 220 forms the core structural layer which provides structural integrity to the toilet lid and on which the first layer is provided. The core structural layer is formed of materials comprising at least one of medium density fiberboard (MDF), high density fiberboard (HDF), wood, bamboo, molded bamboo powder, molded straw, concrete or plastic.

The core layer 220 may be formed of a medium density fiberboard (MDF). As is known in the art, MDF is formed of wood fibers that are held together with one or more waxes or resins such as epoxies, formaldehyde resins, or phenolic resins. The fiber content and thickness of the MDF core layer 220 may vary based on application requirements. The core layer 220 accounts for the majority of the thickness of the toilet lid 200 and provides most of the rigidity of the toilet lid 200. The thickness of the core layer 220 depends on the strength of the material used and rigidity provided by the materials and may be between 3 mm to 25 mm, more preferred between 9 mm and 20 mm. For example, in the preferred embodiment, the thickness of the core layer 220 made with MDF is approximately fifteen millimeters (15 mm) while the thickness of the core layer with concrete can be reduced to approximately 3 mm. The thickness of the core layer 220 made with MDF may also be eighteen millimeters (18 mm).

In an embodiment, the core layer 220 may be formed of two or more sub-layers, each sub-layer comprising one of the materials described above. In an embodiment, one or both sides of the core layer 220 are painted to hide or protect the finish of the core layer and provide an appropriate surface for including further layers.

In an embodiment, a support layer 230 is provided between the first layer 210 and the core layer 220. The support layer is provided to support the stone on the first layer and provide structural integrity to the first layer. The support layer 230 and the first layer 210 are joined together with an adhesive layer 240. The support layer is made of materials which provide good tactile characteristics and at the same time provide reinforcing characteristics to support a thin layer of stone. Examples of materials for support layer includes fiberglass mesh, textile fabric, plastic or paper sheets.

A suitable adhesive for joining the first layer and the support layer are used depending on the type of material used as the support layer and the type of slate stone.

In some embodiments, the first layer 210 also includes the support layer 230 and both form part of a composite first layer. Therefore, when a first layer is referred in this application, it could also be a composite first layer according to the embodiment. For example, the first layer may be a flexible stone veneer comprising a thin support layer of fiberglass or a polyester resin composite backing.

In one embodiment of preparing the first layer, a thin layer of slate stone is stripped or peeled from a metamorphic stone marble chips or slab. That is, a support layer such as a resin or a fiberglass layer is provided on a surface of a slate stone and is allowed to adhere to the surface by means of an adhesive. Once, the support layer adheres, the layer is "pulled" or "stripped" away from taking with it the thin layer of slate stone. Thereby forming a composite first layer comprising the support layer adhered to the thin layer of stone formed on the surface. Other suitable methods may also be used for forming the first layer including the support layer. Some examples of adhesive are, but not limited to, PU-Adhesive, MS-Polymer, Epoxy, Silicone, etc.

In some embodiments, the support layer 230 is formed of materials such as resins which provide the characteristics of both the support layer and the adhesive required to adhere to the layer of stone, thereby not requiring an additional layer of adhesive.

Depending on the type of slate stone, the thickness of the stone layer and the material used for the support surface, the characteristics of the composite first layer can be changed. For example, if the layer of stone is thin and the support layer is transparent, it is possible that the first layer can be made to be translucent. Similarly, when the layer of stone is thicker and the support layer is made of stiff materials the stability of the first layer increases and the flexibility of the first layer reduces. Some examples of the composite first layer are, but not limited to Slate|Lite^{™}, Eco|Stone^{™} or Trans|Lucent^{™} available from Slate Lite - R&D GmbH.

The first layer is adhered to the core layer by means of an adhesive layer 250. Suitable adhesives may be used for this purpose depending on the characteristics of the first layer and the material used for the core layer. For example, adhesive such as Soudaseal HT Black, Soudal 240 FC Grey/ Black, Soudal Fix All Floor & Wall White, A Grey, Epoxyadhesive or other Polymer based adhesives may be used.

In certain embodiments, the adhesive layer also forms part of the first layer at the bottom surface of the first layer. For example, the composite first layer may contain an adhesive layer at the bottom surface which is a self-adhesive layer. The self-adhesive layer may be an Acrylic Adhesive having a liner paper such as Glassine such that the first layer may be adhered to the core layer using the self-adhesive layer. Other self adhesive layer may be appropriately selected with properties such that it is capable of adhering to the material of the core layer.

While the first layer is provided only on the top surface of the core layer, a skilled person may understand that a layer similar to the composite first layer can be provided to adhere to the lower surface of the core layer.

The thickness and material of the first layer are selected such that the first layer is flexible and allows forming of bended or curves upper surface.

FIG. 4 shows a top view another embodiment of the discloses where the toilet lid is provided with illumination.

As discussed above, the first layer can be appropriately made such that it is capable of providing a translucent. For example, in an embodiment of the invention, the first layer is selected such that the slate stone layer has a thickness of 0.1 mm to 0.4 mm and the support layer is also a transparent or translucent layer made of natural polyester and/or fiberglass for necessary strength and dimensional stability of the layer.

An illumination means provided under the first layer such that the light passes through the translucent first layer. The illumination means may be provided such that only a part of the toilet lid is illumination or the entire upper surface is illuminated. For example, the illumination means are provided to represent a pattern, design, graphic, character, a logo, name or words or objects underneath. In the present embodiment, the illumination is provided along the contours of the toilet lid and the surface of the toilet lid is illumination along the portion 260 as shown in FIG.4.

Different types of illumination means can be provided such as an electroluminescent lighting means, however, other suitable means of illumination, for example, but not limited to LED lights.

FIG. 5 shows the cross sectional of the toilet lid having the illumination. While the illumination means may be provided in a separate layer between the first layer and the core layer, in a preferred embodiment, the core structural layer 220 comprises at least one recesses portion 221 on the first surface of the core structural layer to accommodate the illumination means. This configuration avoids a use of an additional layer and reduces the overall thickness of the toilet lid while also ensuring no empty space between the core layer and the first layer is provided.

In particular, the core layer 220 has one or more recess 221 which can accommodate illumination means 222. The shape and size of the recess are provided such that the illumiation means is appropriately inside the recess.

Next, a method of manufacturing a toilet lid according to one embodiment of the present disclosure.

First, a core structural layer 220 is prepared to have a size and shape suitable for its application (step 410). Preparation of the core structural layer may include painting one or more surfaces of the core structural layer.

Next, a first layer 210 is prepared by providing a slate stone layer. This stone layer is then joined to a support layer for stability. As described above, this step of preparing the first layer may include first adhering the support layer on the surface of a slate stone and then stripping or pulling the said layer taking with it a thin layer of stone. Alternatively, a thin layer of stone is joined with a support layer using suitable adhesives to form a composite first layer. Additionally, the first layer may then be provided with a self-adhesive layer on the surface opposite to the surface where the stone layer is provided.

If an illumination is to be provided to the toilet lid, the core layer is provided with a recess at appropriate locations on the upper surface such that the illumination means is provided in the recess of the core layer and under the first layer.

The first layer is then adhered to the upper surface of the core layer by using the self-adhesive layer if provided. It the first layer does not include a self adhesive layer, the first layer is adhered using a suitable adhesive.

Other embodiments of the method could be used without departing from the scope of this disclosure, as long as they fall within the scope of the claims. For example, the steps may overlap, occur in parallel, occur in a different order, or occur multiple times.

It may be advantageous to set forth definitions of certain words and phrases used throughout this patent document. The terms "include" and "comprise," as well as derivatives thereof, mean inclusion without limitation. The term "or" is inclusive, meaning and/or. The phrases "associated with" and "associated therewith, " as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible as long as they fall within the scope of the invention as defined by the following claims.

## Claims

1. A toilet lid (102, 202) capable of being connected to a toilet seat (104, 204), wherein the toilet lid comprises:
a core structural layer (306) having a shape and size associated with the toilet lid, and
a first layer disposed on a first surface of the core structural layer, wherein the first layer is formed of a slate stone,
wherein the first layer is bonded to the core structural layer using an adhesive.

2. The toilet lid according to claim 1, wherein the thickness of the first layer is between 0.8 mm to 4.5 mm.

3. The toilet lid according to any of claims 1 to 2, wherein the core structural layer is formed of materials comprising at least one of medium density fiberboard (MDF), high density fiberboard (HDF), wood, bamboo, molded bamboo powder, molded straw, concrete or plastic.

4. The toilet lid according to any of claims 1 to 3, wherein a second layer is disposed between the first layer and the core structural layer.

5. The toilet lid according to claim 4, wherein the second layer forms part of the first layer and the first and second layer are bonded using an adhesive.

6. The toilet lid according to any one of claims 4 to 5, wherein the second layer provides structural strength to the first layer.

7. The toilet lid according to any of claims 4 to 6, wherein the second layer comprises at least one of fiberglass mesh, textile, plastic or paper.

8. The toilet lid according to any of claims 1 to 7, wherein the thickness and the material of the first layer is selected such that the first layer is translucent.

9. The toilet lid according to any of claims 1 to 8, wherein the thickness and material of the first layer is selected such that the first layer is flexible.

10. The toilet lid according to any of claims 1 to 9, wherein an illumination means is provided under the first layer.

11. The toilet lid according to claim 10, wherein the illumination means is an electroluminescent lighting means.

12. The toilet lid according to any of claims 10 and 11, wherein the core structural layer comprises at least one recesses portion on the first surface of the core structural layer to accommodate the illumination means.

13. The toilet lid according to any of claims 1 to 11, wherein the first layer disposed on the core layer has a shape and size associated with the toilet lid such that the core layer and the first layer form a flush finish of the toilet lid edge.

14. The toilet lid according to any of claims 1 to 13, wherein the core structural layer comprises two or more sub-layers, wherein each of the sub-layers comprises at least one of medium density fiberboard (MDF), high density fiberboard (HDF), wood, bamboo, molded bamboo powder, molded straw, concrete or plastic.

15. The toilet lid according to any of claims 1 to 14, wherein at least one of the first surface or the second surface of the core structural layer is painted.

16. The toilet lid according to any of claims 1 to 9, wherein the thickness of the core structural layer is between 3 mm to 18 mm.

17. A toilet lid assembly, comprising:
a toilet lid as claimed in any one of claims 1 to 16; and
a toilet seat connected to the said toilet lid.

18. A method of manufacturing a toilet lid, the method comprising:
preparing a core structural layer having a shape and size associated with the toilet lid,
preparing a first layer formed of a slate stone, and
applying the first layer to a first surface of the core structural layer such that the first layer is bonded to the core structural layer using an adhesive.

19. The method according to claim 18, further comprises,
providing a second layer bonded to the first layer using adhesive.

20. The method according to any of claims 18 to 19, further comprising providing an illumination means under the first layer.

21. The method according to claim 20, further comprises,
preparing a recess on the core structural layer, and
providing the illumination means in the recess of the core structural layer.

## Patentansprüche

1. Toilettendeckel (102, 202), der mit einem Toilettensitz (104, 204) verbunden werden kann, wobei der Toilettendeckel umfasst:
eine Kernstrukturschicht (306) mit einer Form und Größe, die dem Toilettendeckel zugeordnet ist, und
eine erste Schicht, die auf einer ersten Oberfläche der Kernstrukturschicht angeordnet ist, wobei die erste Schicht aus einem Schieferstein gebildet ist,
wobei die erste Schicht unter Verwendung eines Klebstoffs mit der Kernstrukturschicht verbunden ist.

2. Toilettendeckel nach Anspruch 1, wobei die Dicke der ersten Schicht zwischen 0,8 mm und 4,5 mm beträgt.

3. Toilettendeckel nach einem der Ansprüche 1 bis 2, wobei die Kernstrukturschicht aus Materialien gebildet ist, die mindestens eines von mitteldichter Faserplatte (MDF), hochdichter Faserplatte (HDF), Holz, Bambus, geformtem Bambuspulver, geformtem Stroh, Beton oder Kunststoff umfassen.

4. Toilettendeckel nach einem der Ansprüche 1 bis 3, wobei eine zweite Schicht zwischen der ersten Schicht und der Kernstrukturschicht angeordnet ist.

5. Toilettendeckel nach Anspruch 4, wobei die zweite Schicht einen Teil der ersten Schicht bildet und die erste und zweite Schicht unter Verwendung eines Klebstoffs verbunden sind.

6. Toilettendeckel nach einem der Ansprüche 4 bis 5, wobei die zweite Schicht der ersten Schicht Strukturfestigkeit verleiht.

7. Toilettendeckel nach einem der Ansprüche 4 bis 6, wobei die zweite Schicht mindestens eines von Glasfasernetz, Textil, Kunststoff oder Papier umfasst.

8. Toilettendeckel nach einem der Ansprüche 1 bis 7, wobei die Dicke und das Material der ersten Schicht so ausgewählt sind, dass die erste Schicht lichtdurchlässig ist.

9. Toilettendeckel nach einem der Ansprüche 1 bis 8, wobei die Dicke und das Material der ersten Schicht so ausgewählt sind, dass die erste Schicht flexibel ist.

10. Toilettendeckel nach einem der Ansprüche 1 bis 9, wobei ein Beleuchtungsmittel unter der ersten Schicht vorgesehen ist.

11. Toilettendeckel nach Anspruch 10, wobei das Beleuchtungsmittel ein elektrolumineszentes Beleuchtungsmittel ist.

12. Toilettendeckel nach einem der Ansprüche 10 und 11, wobei die Kernstrukturschicht mindestens einen Aussparungsabschnitt auf der ersten Oberfläche der Kernstrukturschicht umfasst, um das Beleuchtungsmittel aufzunehmen.

13. Toilettendeckel nach einem der Ansprüche 1 bis 11, wobei die erste Schicht, die auf der Kernschicht angeordnet ist, eine Form und Größe aufweist, die dem Toilettendeckel zugeordnet ist, so dass die Kernschicht und die erste Schicht einen bündigen Abschluss des Toilettendeckelrands bilden.

14. Toilettendeckel nach einem der Ansprüche 1 bis 13, wobei die Kernstrukturschicht zwei oder mehr Unterschichten umfasst, wobei jede der Unterschichten mindestens eines von mitteldichter Faserplatte (MDF), hochdichter Faserplatte (HDF), Holz, Bambus, geformtem Bambuspulver, geformtem Stroh, Beton oder Kunststoff umfasst.

15. Toilettendeckel nach einem der Ansprüche 1 bis 14, wobei mindestens eine der ersten Oberfläche oder der zweiten Oberfläche der Kernstrukturschicht lackiert ist.

16. Toilettendeckel nach einem der Ansprüche 1 bis 9, wobei die Dicke der Kernstrukturschicht zwischen 3 mm und 18 mm beträgt.

17. Toilettendeckelanordnung, umfassend:
einen Toilettendeckel nach einem der Ansprüche 1 bis 16; und
einen Toilettensitz, der mit dem Toilettendeckel verbunden ist.

18. Verfahren zur Herstellung eines Toilettendeckels, wobei das Verfahren umfasst:
Herstellen einer Kernstrukturschicht mit einer Form und Größe, die dem Toilettendeckel zugeordnet ist,
Herstellen einer ersten Schicht, die aus einem Schieferstein gebildet ist, und
Aufbringen der ersten Schicht auf eine erste Oberfläche der Kernstrukturschicht, so dass die erste Schicht unter Verwendung eines Klebstoffs mit der Kernstrukturschicht verbunden ist.

19. Verfahren nach Anspruch 18, ferner umfassend
Bereitstellen einer zweiten Schicht, die unter Verwendung eines Klebstoffs mit der ersten Schicht verbunden ist.

20. Verfahren nach einem der Ansprüche 18 bis 19, ferner umfassend Bereitstellen eines Beleuchtungsmittels unter der ersten Schicht.

21. Verfahren nach Anspruch 20, ferner umfassend
Herstellen einer Aussparung auf der Kernstrukturschicht, und
Bereitstellen des Beleuchtungsmittels in der Aussparung der Kernstrukturschicht.

## Revendications

1. Un abattant de toilette (102, 202) susceptible d'être relié à un siège de toilette (104, 204), l'abattant de toilette comprenant :
une couche structurelle de cœur (306) ayant une forme et une dimension associées à l'abattant de toilette, et
une première couche disposée sur une première surface de la couche structurelle de coeur, la première couche étant formée d'une ardoise,
dans lequel la première couche est liée à la couche structurelle de cœur au moyen d'un adhésif.

2. L'abattant de toilette selon la revendication 1, dans lequel l'épaisseur de la première couche est comprise entre 0,8 mm et 4,5 mm.

3. L'abattant de toilette selon l'une des revendications 1 à 2, dans lequel la couche structurelle de cœur est formée de matériaux comprenant au moins l'un d'entre un panneau de fibres à densité moyenne (MDF), un panneau de fibres à haute densité (HDF), du bois, du bambou, de la poudre de bambou moulée, de la paille moulée, du béton ou du plastique.

4. L'abattant de toilette selon l'une des revendications 1 à 3, dans lequel une seconde couche est disposée entre la première couche et la couche structurelle de coeur.

5. L'abattant de toilette selon la revendication 4, dans lequel la seconde couche fait partie de la première couche, et la première et la seconde couche sont liées à l'aide d'un adhésif.

6. L'abattant de toilette selon l'une des revendications 4 à 5, dans lequel la seconde couche procure une rigidité structurelle à la première couche.

7. L'abattant de toilette selon l'une des revendications 4 à 6, dans lequel la seconde couche comprend au moins l'un d'entre un treillis de fibres de verre, un textile, du plastique ou du papier.

8. L'abattant de toilette selon l'une des revendications 1 à 7, dans lequel l'épaisseur et la matière de la première couche sont choisies de telle manière que la première couche soit translucide.

9. L'abattant de toilette selon l'une des revendications 1 à 8, dans lequel l'épaisseur et la matière de la première couche sont choisies de telle manière que la première couche soit flexible.

10. L'abattant de toilette selon l'une des revendications 1 à 9, dans lequel un moyen d'illumination est prévu sous la première couche.

11. L'abattant de toilette selon la revendication 10, dans lequel le moyen d'illumination est un moyen d'illumination électroluminescent.

12. L'abattant de toilette selon l'une des revendications 10 et 11, dans lequel la couche structurelle de cœur comprend au moins une partie évidée sur la première surface de la couche structurelle de cœur pour y loger le moyen d'illumination.

13. L'abattant de toilette selon l'une des revendications 1 à 11, dans lequel la première couche disposée sur la couche de cœur a une forme et une dimension associées à l'abattant de toilette de telle manière que la couche de cœur et la première couche donnent un fini sans aspérité au bord de l'abattant de toilette.

14. L'abattant de toilette selon l'une des revendications 1 à 13, dans lequel la couche structurelle de cœur comprend deux sous-couches ou plus, chacune des sous-couches comprenant au moins l'un d'entre un panneau de fibres à densité moyenne (MDF), un panneau de fibres à haute densité (HDF), du bois, du bambou, de la poudre de bambou moulée, de la paille moulée, du béton ou du plastique.

15. L'abattant de toilette selon l'une des revendications 1 à 14, dans lequel au moins l'une de la première surface ou de la seconde surface de la couche structurelle de cœur est peinte.

16. L'abattant de toilette selon l'une des revendications 1 à 9, dans lequel l'épaisseur de la couche structurelle de cœur est comprise entre 3 mm et 18 mm.

17. Un ensemble d'abattant de toilette, comprenant :
un abattant de toilette tel que revendiqué dans l'une des revendications 1 à 16 ; et
un siège de toilette relié audit abattant de toilette.

18. Un procédé de fabrication d'un abattant de toilette, le procédé comprenant :
la préparation d'une couche structurelle de cœur ayant une forme et une dimension associées à l'abattant de toilette,
la préparation d'une première couche formée d'une ardoise, et
l'application de la première couche sur une première surface de la couche structurelle de cœur de telle manière que la première couche soit liée à la couche structurelle de cœur à l'aide d'un adhésif.

19. Le procédé selon la revendication 18, comprenant en outre :
la mise en place d'une seconde couche liée à la première couche à l'aide d'un adhésif.

20. Le procédé selon l'une des revendications 18 à 19, comprenant en outre :
la mise en place d'un moyen d'illumination sous la première couche.

21. Le procédé selon la revendication 20, comprenant en outre :
la préparation d'un évidement sur la couche structurelle de coeur, et
la mise en place du moyen d'illumination dans l'évidement de la couche structurelle de coeur.
